# EUROPEAN PATENT APPLICATION

(11) **EP 2 077 683 A2**
(43) Date of publication of application: **08.07.2009**
(21) Application number: 08171267.1
(22) Date of filing: 10.12.2008
(51) Int. Cl.: H04W 8/20, H04M 1/57, H04H 20/53, H04M 1/2745, H04W 88/02

(54) **Method, system and apparatus for updating phonebook information**

(30) Priority: 04.01.2008 KR 20080001367
(71) Applicant: Samsung Electronics Co., Ltd., Suwon-si, Gyeonggi-Do (KR)
(72) Inventor: Jung, Hoon Soub, Suwon-si Gyeonggi-do (KR)
(74) Representative: Harrison Goddard Foote

(57) **Abstract**

A method, a system, and an apparatus for updating phonebook information in which a Transport Protocol Expert Group (TPEG) message including update information is transmitted to a counterpart terminal using a TPEG service when a telephone number is changed and the counterpart terminal that received the TPEG message updates a telephone number stored in a phonebook in accordance with a phonebook information update command included in the update information. To be specific, a user transmits the update information including an old telephone number, a new telephone number, and a counterpart telephone number to the TPEG server and the TPEG server encodes the received update information as the TPEG message to transmit the TPEG message. The counterpart terminal that received the TPEG message updates the phonebook information thereof in accordance with the update information included in the TPEG message.

## Description

### BACKGROUND OF THE INVENTION

### 1. Field of the Invention

The present invention generally relates to a method, a system, and an apparatus for updating phonebook information. More particularly, the present invention relates to a method, a system, and an apparatus for updating phonebook information to transfer update information to a counterpart terminal using a Transport Protocol Expert Group (TPEG) service so a counterpart terminal receiving the update information updates a telephone number stored in a phonebook of the counterpart terminal in accordance with the update information.

### 2. Description of the Related Art

A TPEG refers to a common standard of the International Organization for Standardization (ISO) and the European Committee for Standardization (CEN) that defines a protocol of transmitting traffic and travel information through various digital broadcasting media and the Internet under the support of the European Broadcasting Union (EBU). Currently, in the TPEG standard, specifications for a Road Traffic Message (RTM) and Public Transport Information (PTI) are standardized. An RTM service refers to a service that provides information affecting the travel speed of a vehicle, such as a traffic accident, a road construction, weather information, etc., and a demonstration to help a user search for an optimal path through which the user can avoid traffic jams to reach a destination. A PTI service refers to a service that provides service schedule(s), route(s), and delay information of buses, trains, passenger ships, airplanes, etc., that are means of public traffic. A TPEG service can provide services such as Congestion, Travel Time information (CTT), Safety Driving Information (SDI), etc.

However, a telephone number often changes due to a personal situation. In addition, a mobile communication service is often shifted from a Code Division Multiple Access (CDMA) service, a second generation (2G) service, to a Wideband Code Division Multiple Access (WCDMA) service, a third generation (3G) service, in accordance with communication technology development. Therefore, existing mobile communication service provider identification numbers, such as 016, 011, and 019, cannot be available so telephone number(s) are typically continuously changing.

However, when a telephone number is changed, in order to inform a counterpart of the changed telephone number, a new telephone number is normally transmitted to the counterpart by a message or by calling counterparts one by one.

### SUMMARY OF THE INVENTION

The present invention has been made in view of the above problems, and provides a method, a system, and an apparatus for updating phonebook information in which a user who wishes to inform his/her changed telephone number transmits a phonebook information update message using a Transport Protocol Expert Group (TPEG) service and a terminal that received the phonebook information update message automatically changes an existing telephone number into a new telephone number by an update command.

In accordance with the present invention, there is also provided a system for updating phonebook information, the system including a first terminal transmitting update information including an old telephone number, a new telephone number, and a counterpart telephone number; a TPEG server transmitting a TPEG message obtained by encoding the update information received from the first terminal in accordance with a TPEG specification; and a second terminal receiving the TPEG message transmitted by the TPEG server to update phonebook information.

In accordance with the present invention, there is also provided a method of updating phonebook information, the method including transmitting, by a first terminal, update information including an old telephone number, a new telephone number, and a counterpart telephone number; encoding the update information to be transmitted from a TPEG server to a TPEG message; and receiving the TPEG message by a second terminal to update phonebook information.

In accordance with the present invention, there is additionally provided an apparatus for updating phonebook information, the apparatus including a digital broadcasting receiving unit receiving a broadcasting signal including a TPEG message; a control unit decoding the TPEG message and for updating phonebook information when the TPEG message is a phonebook information update message; and a memory unit storing a telephone number updated in accordance with a command from the control unit.

In an additional feature of the present invention, in the method, the system, and the apparatus for updating the phonebook information, the telephone number may not be changed directly by a user of the terminal but may automatically be changed by an update message, for the purpose of convenience.

In another feature of the present invention, a TPEG service that is currently limited to transmitting traffic information may also be made versatile.

### BRIEF DESCRIPTION OF THE DRAWINGS

These aspects, features and advantages of the present invention will be more apparent from the following description and the accompanying drawings, in which:

FIG. 1 is a diagram illustrating a phonebook information update system according to the present invention;

FIG. 2 is a chart illustrating a common TPEG transport frame;

FIG. 3 is a diagram illustrating a service component frame in a TPEG transport frame according to the present invention;

FIG. 4 is a block diagram of a second terminal according to the present invention;

FIG. 5 is a sequence diagram illustrating a phonebook information update process according to the present invention; and

FIG. 6 is a flowchart illustrating processes of updating the phonebook information of a mobile terminal according to the present invention.

### DETAILED DESCRIPTION OF THE PREFERRED EMBODIMENTS

Preferred embodiments of the present invention will now be described with reference to the accompanying drawings. In the following description, only parts necessary for understanding operations according to the preferred embodiments of the present invention are described and description of the other parts will be omitted in order not to obscure the subject matter of the present invention.

The meaning and concept of specific terms or words used in the description and the claims should not be limited to the dictionary meanings or commonly employed sense, but should be construed in accordance with the spirit of the invention on the ground that an inventor may define suitable terms and words in order to illustrate his/her invention in the best mode. The description of the various embodiments is to be construed as exemplary only and do not describe every possible instance of the invention. Therefore, it should be understood that various changes may be made and equivalents may be substituted for elements of the invention.

For the purpose of description and for convenience sake, a mobile communication terminal according to the present invention is described herein as a mobile communication terminal. However, the present invention is not limited to a mobile communication terminal. That is, a mobile terminal according to the present invention is a terminal that can receive digital broadcasting and that can decode a Transport Protocol Expert Group (TPEG) message and can be applied to any information communication apparatus, multimedia apparatus, and applications thereof, such as a mobile communication terminal, a Personal Digital Assistant (PDA), a smart phone, an International Mobile Telecommunication 2000 (IMT-2000) terminal, a Code Division Multiple Access (CDMA) terminal, a Wideband Code Division Multiple Access (WCDMA) terminal, a Global System for Mobile communication (GSM) terminal, a Universal Mobile Telecommunication Service (UMTS) terminal, a digital broadcasting terminal, a navigation terminal, a portable multimedia player terminal, etc.

As used herein, "update information" refers to information including a message informing a change in a telephone number. To this end, "update information" may include an old telephone number, a new telephone number, a counterpart telephone number, photographs, etc. An "old telephone number" refers to the telephone number before a change of a user who wishes to inform the changed telephone number using a TPEG service. A "new telephone number" refers to a changed telephone number of a user. In addition, the "counterpart telephone number" refers to a telephone number of a counterpart whom a user wishes to inform of a change in the telephone number.

A TPEG message according to the present invention is transmitted through a broadcasting network. However, the present invention is not limited to the above. That is, the TPEG message may be transmitted through the Internet or a transmitting medium that transmits the TPEG message and a broadcasting network based on a broadcasting station.

Although, hereinafter, a method of updating a telephone number is described, the present invention is not limited thereto. For example, not only a telephone number but also a photograph may be transmitted using the TPEG service. That is, a photograph of a user can be transmitted during the transmission of a telephone number update message so a photograph displayed on a display unit of a counterpart terminal when the counterpart answers the telephone may be updated. The transmitted photograph may be used for distinguishing the user from another person who has the same name.

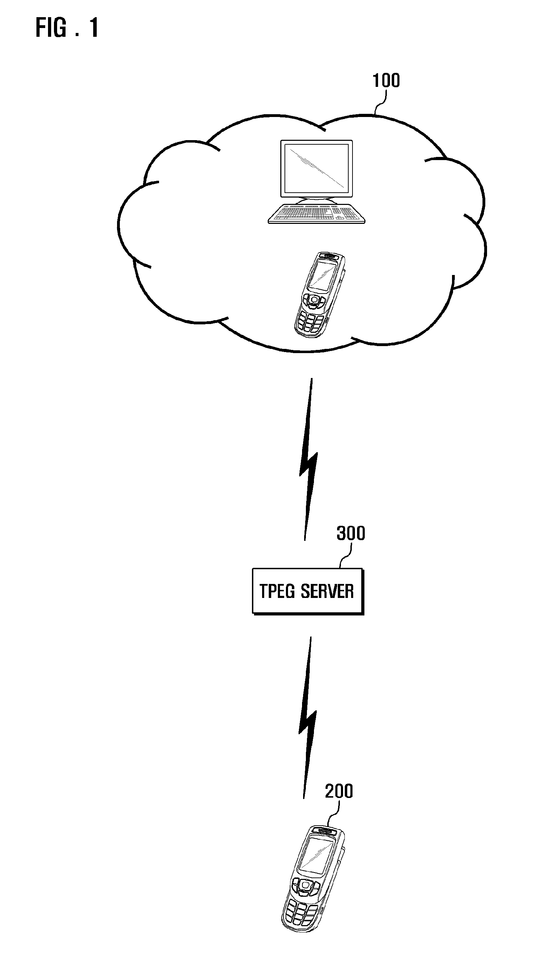

FIG. 1 shows a phonebook information update system according to the present invention.

The phonebook information update system of FIG. 1 may include a first terminal 100, a second terminal 200 decoding a TPEG message, and a TPEG server 300 generating the TPEG message.

The first terminal 100 may be a terminal of a user who changed his/her telephone number and transmits update information including an old telephone number and a new telephone number of the user, and a telephone number of a counterpart to the TPEG server 300. As previously described, the first terminal 100 is referred herein to as a mobile terminal. However, the present invention is not limited to the above. For example, when a Personal Computer (PC) transmits the update information to the TPEG server 300, the first terminal 100 may be the PC.

The update information may include the old telephone number, the new telephone number, the counterpart telephone number, and a photograph.

The TPEG server 300 providing the TPEG service encodes the update information received from the first terminal 100 in accordance with the TPEG specification to generate the TPEG message. The TPEG message may be transmitted to the second terminal 200 through a broadcasting network, such as a Digital Audio Broadcasting (DAB) network or a Digital Multimedia Broadcasting (DMB) network. To be specific, when the TPEG message is transmitted through a broadcasting station providing a DAB service or a DMB service, the broadcasting station may include the TPEG message in a Transparent Data Channel (TDC) of a broadcasting signal as additional data to transmit the TDC including the TPEG message. When the TPEG message is transmitted through a Transmission Control Protocol/Internet Protocol (TCP/IP) network, the TPEG message may be transmitted in an IP datagram.

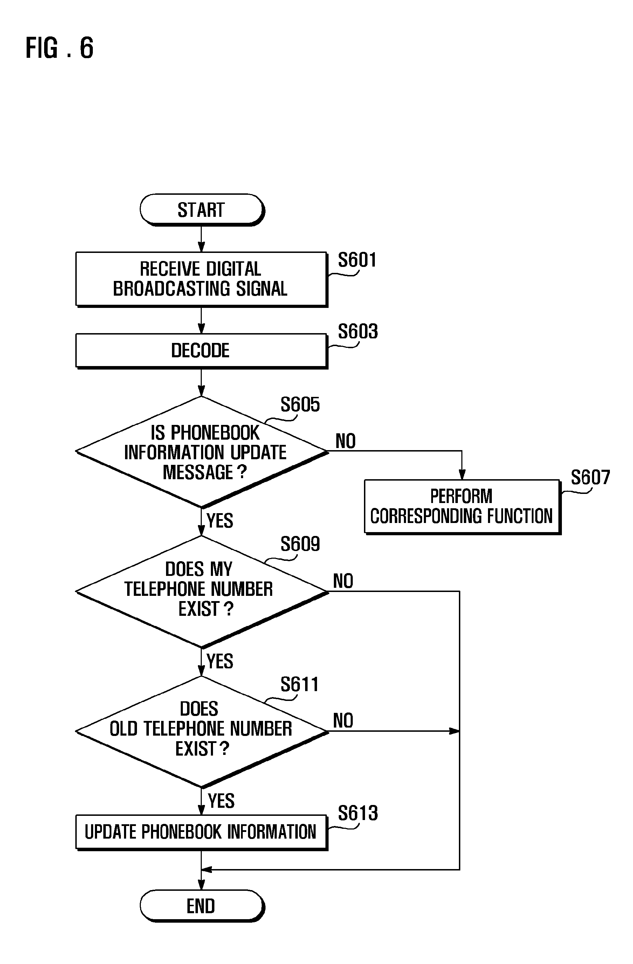

The second terminal 200 is a terminal receiving the TPEG message transmitted from the TPEG server 300 to decode the TPEG message. When the second terminal 200 receives the broadcasting signal containing the TPEG message through the DAB network or the DMB network, the TPEG message may be extracted from the broadcasting signal. Then, the second terminal 200 may decode the TPEG message. When the TPEG message includes an identifier for a phonebook information update, the second terminal 200 may update the phonebook information thereof. A description of the phonebook information update method will be described later with reference to FIG. 6.

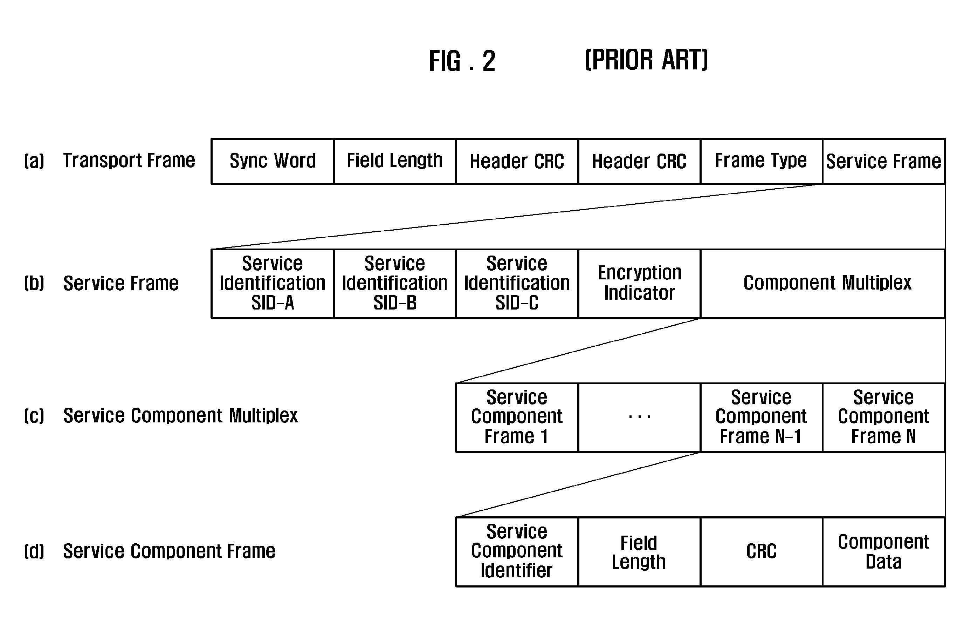

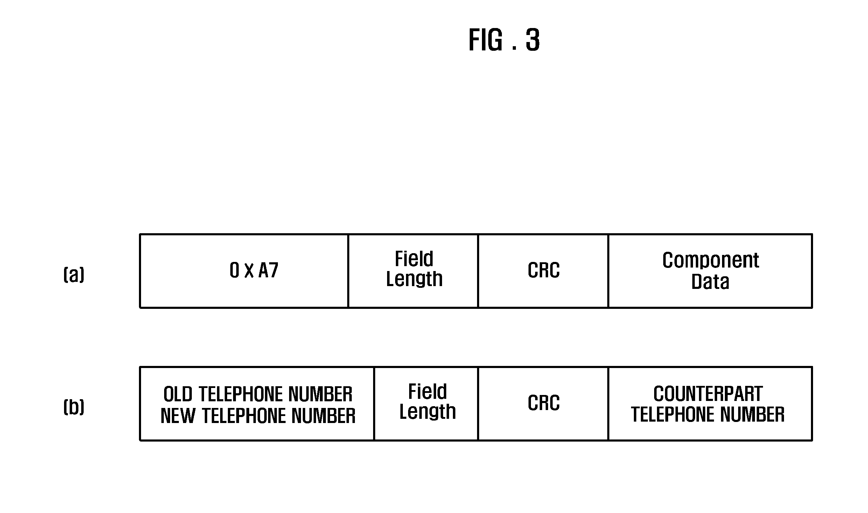

The phonebook information update system was described above. A TPEG frame according to the present invention will now be described with reference to FIGS. 2 and 3.

FIG. 2 shows a common TPEG frame in accordance with a TPEG specification.

FIG. 3 shows a service component frame in a TPEG frame according to the present invention.

Referring to area (a) of FIG. 2, a TPEG Transport Frame can include a Synchronizing Word informing the starting part of a frame, a Field Length of two bytes representing information on the length of a service frame, a Header Cyclic Redundancy Check (Header CRC) of two bytes as a cyclic code added to detect errors generated in data transmission processes, a Frame Type of one byte defining the type of the service frame, and a Service Frame having two types in accordance with the frame type.

Referring to section (b) of FIG. 2, the Service Frame may include a Service Identifification A (SID-A), a Service Identifification B (SID-B), and a Service Identification C (SID-C) having respective unique values as a similar concept to an IP address of a network, an Encryption Indicator of one byte representing the encryption of data, and a Component Multiplex obtained by multiplexing a plurality of service component frames.

Referring to areas (c) and (d) of FIG. 2, the Service Component Frame may include a Service Component Identifier, a Field Length, a CRC, and Component Data.

The Service Component Identifier represents a specific service related to the transmitted data. For example, "0" represents a reservation for applying for a service network (SNI). Referring to area (a) of FIG. 3, the Service Component Identifier "OxA7" according to the present invention may represent a phonebook information update message. In other words, the second terminal 200 decodes the TPEG message contained in the received broadcasting signal so it is possible to know that the TPEG message is the phonebook information update message when the Service Component Identifier "OxA7" exists. However, the present invention is not limited to the Component Identifier "OxA7". That is, an identifier defined by a designer or standardization may be used as the Component Identifier according to the present invention.

The Component Data storing data to be transmitted may store information, such as accident information, road state information, network performance, a network state, etc. Referring to area (b) FIG. 3, the Component Data according to the present invention may include the old telephone number and the new telephone number of the first terminal 100 and a counterpart telephone number. The Component Data may be used for updating the phonebook information of the second terminal 200. The counterpart telephone number contained in the Component Data may be used for the second terminal 200 that received the TPEG message to compare the counterpart telephone number with the telephone number thereof and to determine whether the TPEG message is a message for the second terminal 200. That is, when the counterpart telephone number contained in the Component Data coincides with the telephone number of the second terminal 200, it is noted that the TPEG message is a message transmitted to the second terminal 200.

After determining that the TPEG message is transmitted to the second terminal 200, the old telephone number and the new telephone number may be used for the second terminal 200 to update the phonebook information thereof. That is, when the same telephone number as the old telephone number exists in the phonebook of the second terminal 200, the second terminal 200 may delete the old telephone number from the phonebook thereof to change the old telephone number into the new telephone number. The second terminal 200 may add the new telephone number without deleting the old telephone number. In this case, the added new telephone number is preferably set as a representative telephone number.

On the other hand, there may be various methods for storing a telephone number in the Component Data. However, according to the present invention, in order to improve efficiency of storing data, a method of mapping a mobile communication service provider identifying number to a single digit number to store the number may be used. To be specific, an "010" identifying number may be mapped to "0", an "016" identifying number may be mapped to "6", an "011" identifying number may be mapped to "1", and an "019" identifying number may be mapped to "9". For example, a telephone number 016-252-@@@@ may be stored as 6-252-@@@@.

In addition, the Component Data may include version information that represents the number of updates of the TPEG message including the update information and the version information may be used for preventing the TPEG message from being determined again when the second terminal 200 has previously determined the TPEG message.

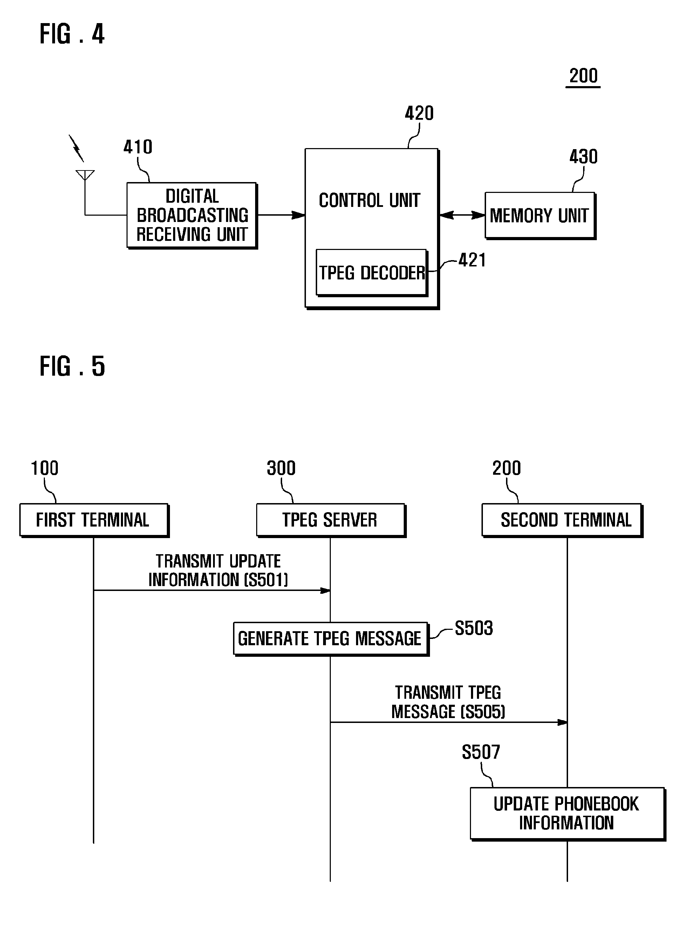

The configuration of the TPEG Transport Frame and the configuration of the Service Component Frame included in the configuration of the TPEG Transport Frame according to the present invention were described with reference to FIGS. 2 and 3. Mobile terminal updating phonebook information according to the present invention will now be described with reference to FIG. 4.

FIG. 4 shows the second terminal 200 according to the present invention. The second terminal 200 may receive the digital broadcasting signal transmitted from the broadcasting station and may store the phonebook information.

The second terminal 200 of FIG. 4 may include a digital broadcasting receiving unit 410, a control unit 420, and a memory unit 430.

The digital broadcasting receiving unit 410 may receive the DAB broadcasting signal or the DMB broadcasting signal. The DAB broadcasting signal or the DMB broadcasting signal may include the TPEG message in the TDC as additional data. In particular, the digital broadcasting receiving unit 410 according to the present invention may separate the DAB broadcasting signal or the DMB broadcasting signal into the TPEG message, a video signal, and an audio signal. After that, the video signal is transmitted to a video signal decoder (not shown) and the audio signal may be transmitted to an audio signal decoder. The TPEG message extracted by the digital broadcasting receiving unit 410 is transmitted to a TPEG decoder 421 provided in the control unit 420. The TPEG decoder 421 will be described below in the description of the control unit 420.

The memory unit 430 may store application programs used for a functional operation according to the present invention, user data, and phonebook information. The memory unit 430 according to the present invention may store an application program comparing the telephone number included in the phonebook information thereof with the telephone number included in the TPEG message. The memory unit 430 may include a program region and a data region.

The program region stores an Operating System (OS) booting the second terminal 200, a message service application program processing a message, and an application program for other optional functions of the mobile terminal, such as a sound reproducing function, an image and/or moving picture reproducing function, mobile broadcasting signal reception, etc. An application program receiving the TPEG message to decode the same may be stored in the program region according to the present invention. The application program may include mapping information obtained by mapping the mobile communication service provider identifying number to a single digit number, such as "016" mapped to "6", "019" mapped to "9", "011" mapped to "1", etc.

The data region is a region to which data generated by using the second terminal 200 is stored and may store user data related to various optional functions provided by the second terminal 200, such as the previously described moving picture and audio data and information corresponding to contents or user data. The data region according to the present invention may store phonebook information. The phonebook information is updated by the control unit 420 when the TPEG message including phonebook update information is received or a new telephone number may be added to the phonebook information.

The control unit 420 controls the overall operation of the second terminal 200 and signal flow between the internal blocks of the second terminal 200. The control unit 420 may include a TPEG decoder 421 decoding the received TPEG message. The control unit 420 may determine the service component identifier of the decoded TPEG message to determine whether the decoded TPEG message is the phonebook information update message. When the TEPG message includes an identifier informing that the TPEG message is the phonebook information update message, the control unit 420 may determine whether the telephone number thereof is included in component data.

The control unit 420 may update phonebook information when the telephone number thereof is included in the component data. Processes of updating the phonebook information will be described below with reference to FIG. 6.

On the other hand, the control unit 420 displays a popup window informing that the TPEG message updating the phonebook information is received on the display unit (not shown) of the second terminal 200 or informs the user that the TPEG message updating the phonebook information is received and may control the phonebook information to be updated when the user selects the phonebook information to be updated. The control unit 420 may determine the version information included in the TPEG message to determine whether the phonebook information is updated. The control unit 420 may determine the version information that represents the number of times of the updates of the TPEG message to delete the received TPEG message when the TPEG message is the previously determined phonebook information update message.

The control unit 420 may add a new telephone number without deleting the telephone number included in the phonebook information of the second terminal 200 when the phonebook information update message is received. In this case, the control unit 420 may set the new telephone number as a representative telephone number. The phonebook information may be selected to be automatically updated or manually updated in the environment setting menu of the second terminal 200.

The second terminal 200 according to the present invention was described above. A method of updating the phonebook information according to the present invention will be now be described.

FIG. 5 shows a phonebook information update process according to the present invention.

Referring to FIG. 5, the first terminal 100 transmits update information including the old telephone number and the new telephone number thereof and the counterpart telephone number to the TPEG server 300 in step S501.

The TPEG server 300 reforms the update information received in step S501 to be suitable for the TPEG specification to encode the update information as the TPEG message for updating the phonebook information in the step S503. The TPEG message may be encoded as described above with reference to FIGS. 2 and 3.

The TPEG message may be transmitted to the second terminal 200 in step S505. Although not shown in FIG. 5, the TPEG message is included in the TDC as additional data to be transmitted through the DMB broadcasting network to be transmitted through the broadcasting signal.

The second terminal 200 that received the broadcasting signal decodes the TPEG message to update the phonebook information when the TPEG message is the phonebook information update message in step S507. Processes of updating the phonebook information of the second terminal 200 will now be described with reference to FIG. 6.

FIG. 6 shows processes of updating the phonebook information of the second terminal 200 according to the present invention.

Referring to FIG. 6, the control unit 420 of the second terminal 200 receives the broadcasting signal including the TPEG message in step S601. When the TPEG message is received through the broadcasting signal, the TPEG message may be added to the TDC to be transmitted. The TPEG message may include the old telephone number, the new telephone number, and the counterpart telephone number. The TPEG message may further include photograph data. The photograph data is stored in association with the phonebook information and may be displayed in the display unit when the user answers the telephone.

The digital broadcasting receiving unit 410 may separate the TPEG message from the broadcasting signal. The separated TPEG message may be decoded by the TPEG decoder 421 of the control unit 420 in step S603.

Then, the control unit 420 determines the service component identifier of the decoded TPEG message to determine whether the TPEG message is the phonebook information update message in step S605. When the TPEG message is not the phonebook information update message, the control unit 420 performs a corresponding function in step S607. For example, when the TPEG message is a traffic information service message, traffic information, such as a traffic jam, a road state, and the like may be displayed on the display unit (not shown) of the second terminal 200.

When it is determined that the TPEG message is the phonebook information update message in step S605, the control unit 420 determines whether the telephone number thereof is included in the component data of the TPEG message in step S609. When the telephone number of the second terminal 200 is not included in the component data, the control unit 420 determines that the TPEG message is not a phonebook information update message for that terminal so as to stop the updating of the phonebook information. When it is determined that the telephone number of the second terminal 200 is included in the component data in step S609, the control unit 420 may search for the telephone numbers stored in the phonebook thereof to determine whether the same telephone number as the old telephone number stored in the component data exists in step S611.

When it is determined that the same telephone number as the old telephone number included in the component data does not exist in the phonebook of the second terminal 200 in step S611, the control unit 420 may stop the updating of the phonebook information. On the other hand, when it is determined that the same telephone number as the old telephone number included in the component data exists in the phonebook in step S611, the control unit 420 may automatically update the telephone number included in the phonebook thereof to a new telephone number in step S613. Alternatively, the control unit 420 may add a new telephone number and may set the new telephone number as a representative telephone number. In addition, the control unit 420 may inform the user of the phonebook information before updating the phonebook information so that the user can select whether the phonebook information is updated. The phonebook information may be selected to be automatically updated or manually updated in a setting menu.

Although preferred embodiments of the present invention have been described above, it should be understood that many variations and modifications of the basic inventive concept herein described, which may appear to those skilled in the art, fall within the spirit and scope of the preferred embodiments of the present invention as defined in the appended claims.

## Claims

1. A system for updating phonebook information, comprising:
a first terminal (100) transmitting update information including an old telephone number, a new telephone number, and a counterpart telephone number;
a transport protocol expert group (TPEG) server (300) transmitting a TPEG message obtained by encoding the update information received from the first terminal in accordance with a TPEG specification; and
a second terminal (200) receiving the TPEG message transmitted by the TPEG server to update phonebook information.

2. The system for updating phonebook information of claim 1, wherein the TPEG message comprises an identifier representing that the TPEG message is a phonebook information update message.

3. The system for updating phonebook information of claims 1 or 2, wherein the TPEG message further comprises version information representing the number of times of updates of the TPEG message.

4. A method of updating phonebook information, comprising:
transmitting, by a first terminal, update information comprising an old telephone number, a new telephone number, and a counterpart telephone number (S501);
encoding the update information to be transmitted from a TPEG server to a TPEG message (S503, S505); and
receiving the TPEG message by a second terminal to update phonebook information (S507).

5. The method of updating phonebook information of claim 4, wherein the updating of the phonebook information comprises:
receiving a digital broadcasting signal including the TPEG message to be decoded (S601,S603);
determining whether an identifier representing that the TPEG message is a phonebook information update message is included (S605); and
updating the phonebook information when the identifier representing that the TPEG message is the phonebook information update message is included (S613).

6. The method of updating phonebook information of claim 5, further comprising at least one steps of determining whether a telephone number of a user is included in the TPEG message after determining whether the identifier is included or determining whether the old telephone number is included in a phonebook.

7. The method of updating phonebook information of any of claims 4 to 6, further comprising displaying a popup window informing a user that a phonebook update message is received and selecting whether the phonebook information is to be updated.

8. The method of updating phonebook information of any of claims 4 to 7, wherein the update information further comprises photograph data and the photograph data is stored in association with the phonebook information when the phonebook information is updated.

9. An apparatus for updating phonebook information, comprising:
a digital broadcasting receiving unit (410) receiving a broadcasting signal comprising a TPEG message;
a control unit (420) decoding the TPEG message and for updating phonebook information when the TPEG message is a phonebook information update message; and
a memory unit (430) storing a telephone number updated in accordance with a command from the control unit (420).

10. The apparatus for updating phonebook information of claim 9, wherein the control unit (420) determines an identifier included in the TPEG message to determine whether the identifier is a phonebook information update command.

11. The apparatus for updating phonebook information of any of claims 9 to 10, wherein the control unit (420) displays a popup window informing that a phonebook information update message is received and determines whether the phonebook information is updated.

12. The apparatus for updating phonebook information of any of claims 9 to 11, wherein the control unit (420) determines version information included in the TPEG message to determine whether the version information is updated.
